Europäisches Patentamt

European Patent Office

Office européen des brevets

(11) Numéro de publication: **0 407 284 A1**

# DEMANDE DE BREVET EUROPEEN

(21) Numéro de dépôt: 90401906.4

(22) Date de dépôt: 02.07.90

(51) Int. Cl.5: **H02G 7/05**

(30) Priorité: **07.07.89 FR 8909214**

(43) Date de publication de la demande:
**09.01.91 Bulletin 91/02**

(84) Etats contractants désignés:
**AT CH DE GB IT LI**

(71) Demandeur: **SAMYP, SOCIETE ANONYME**
**Caer, Normanville**
**F-27930 Evreux(FR)**

(72) Inventeur: **Mouchard, Philippe**
**25 rue de Panama**
**F-27000 Evreux(FR)**

(74) Mandataire: **Thévenet, Jean-Bruno et al**
**Cabinet BEAU DE LOMENIE 55 rue**
**d'Amsterdam**
**F-75008 Paris(FR)**

(54) **Dispositif d'ancrage pour câble multicouche à circuit de télécommunication incorporé.**

(57) Le dispositif d'ancrage pour câble multicouche à circuit de télécommunication incorporé comprend une pince courbe (101) munie d'une gorge (110) définissant un trajet circulaire de rayon R s'étendant sur au moins une distance égale à $2\pi R$; une paire de demi-coquilles à profil circulaire définissant un cylindre de diamètre correspondant au diamètre de la couche externe (6) de protection en fil d'alliage léger, ladite paire de demi-coquilles étant engagée autour des couches de fil d'acier sur une partie dénudée du câble multicouche située en sortie de la pince courbe (101) du côté d'un pylône d'ancrage; un manchon coulissant constitué de deux parties complémentaires adaptées pour venir s'emboîter l'une dans l'autre, ledit manchon coulissant étant disposé sur ladite paire de demi-coquilles et comprimé radialement contre celles-ci; et un support (104) pour le manchon rendu solidaire de la pince courbe (101).

Ce dispositif permet de réaliser un ancrage sans coupure du circuit de télécommunication.

Fig.5

EP 0 407 284 A1

# DISPOSITIF D'ANCRAGE POUR CÂBLE MULTICOUCHE À CIRCUIT DE TÉLÉCOMMUNICATION INCORPORÉ

La présente invention a pour objet un dispositif d'ancrage pour câble multicouche à circuit de télécommunication incorporé comprenant une couche externe de protection en fil d'alliage léger, au moins une couche de fil d'acier située sous ladite couche externe, un tube en alliage léger situé sous ladite couche et un circuit de télécommunication situé à l'intérieur du tube en alliage léger.

Dans le cas d'une liaison par câble à circuit de télécommunication incorporé destiné à permettre une communication entre un premier poste muni d'un équipement émetteur-récepteur et un deuxième poste muni également d'un équipement émetteur-récepteur, il convient d'assurer une tension mécanique au câble au niveau de chaque pylône d'ancrage intermédiaire situé entre les premier et deuxième postes. Ces ancrages sont réalisés à l'aide de manchons comprimés sur le câble et rattachés à une structure rigide reliée par une articulation au pylône. Si le câble multicouche comprend un circuit de télécommunication constitué par des fibres optiques enroulées en hélice dans des gorges d'une âme centrale, il peut se produire une rupture des fibres optiques lorsque l'on exerce une pression radiale au niveau du raccord d'ancrage. Par ailleurs, la technique connue d'ancrage de tels câbles comprenant un circuit de télécommunication implique d'effectuer une coupure du câble à ancrer au niveau de chaque pylône d'ancrage et de réaliser un raccordement des fibres optiques au bas de ce même pylône avec un équipement spécialisé. Ceci rend complexe et coûteux l'ancrage d'un câble et tend à diminuer l'efficacité de la transmission par les fibres optiques du fait des nombreuses jonctions réparties le long de la ligne au niveau de chaque pylône d'ancrage.

La présente invention vise à remédier aux inconvénients précités et à permettre de réaliser de façon simple l'ancrage de câbles multicouches à circuit de télécommunication incorporé sans risque de rupture des fibres optiques du circuit de télécommunication ni nécessité de procéder à une coupure du câble au niveau de chaque pylône d'ancrage.

Ces buts sont atteints grâce à un dispositif d'ancrage pour câble multicouche à circuit de télécommunication incorporé du type défini en tête de la description, caractérisé en ce qu'il comprend une pince courbe munie d'une gorge définissant un trajet circulaire de rayon R s'étendant sur au moins une distance égale à 2 R; une paire de demi-coquilles à profil circulaire définissant un cylindre de diamètre correspondant au diamètre de ladite couche externe, ladite paire de demi-coquilles étant engagée autour de la ou des couches de fil d'acier sur une partie dénudée du câble multicouche située en sortie de la pince courbe du côté d'un pylône d'ancrage; un manchon coulissant constitué de deux parties complémentaires adaptées pour venir s'emboîter l'une dans l'autre, ledit manchon coulissant étant disposé sur ladite paire de demi-coquilles et comprimé radialement contre celles-ci; et un support pour le manchon rendu solidaire de la pince courbe.

De préférence le dispositif comprend en outre une garniture de renforcement et protection du câble constituée par des fils préformés en hélice en alliage léger enroulés autour du câble dans au moins toute la zone s'étendant dans la gorge de la pince courbe.

Selon un mode de réalisation particulier, le support pour le manchon présente une section en forme de U et coopère avec des clavettes assurant un emprisonnement du manchon du côté opposé au fond du support.

Selon une variante de réalisation, le support pour le manchon présente une section en forme de U et coopère avec des étriers boulonnés pour immobiliser le manchon sur le support.

Le manchon, qui est avantageusement en alliage d'aluminium peut être déformé et appliqué sur la paire de demi-coquilles par exemple à l'aide d'une compression hexagonale.

Le dispositif d'ancrage selon l'invention est bien adapté pour permettre un ancrage sur des câbles à nature hétérogène des couches le constituant, et garantit une parfaite intégrité du circuit de télécommunication tout en évitant toute coupure du câble au niveau du dispositif d'ancrage, ce qui facilite la mise en oeuvre du dispositif d'ancrage et optimise les performances en évitant notamment de créer des atténuations de signaux.

La mise en oeuvre d'une pince courbe munie d'une gorge dans laquelle est placé le câble permet de diminuer fortement la charge exercée par le câble sur le manchon d'ancrage lui-même placé dans un support solidaire de la pince courbe. La mise en place du manchon est particulièrement commode du fait de la réalisation de celui-ci en deux parties coulissantes qui autorise une introduction aisée de chacune des deux parties de manchon autour du câble au voisinage même du dispositif d'ancrage. Enfin, la présence de deux demi-coquilles à profil circulaire interne interposées entre le manchon et les couches de fil d'acier permet d'assurer une répartition homogène des efforts dans le sens radial lorsqu'une compression est effectuée sur le manchon, même si celle-ci n'est pas homogène radialement et est par exemple de type hexagonale.

On notera que la mise en oeuvre du dispositif d'ancrage selon l'invention n'implique pas d'outillage spécialisé complexe et peut être réalisée facilement, notamment du fait qu'il n'est pas nécessaire de couper le câble et d'effectuer des jonctions des éléments de transmission de signaux du circuit de télécommunication, tels que des fibres optiques.

D'autres caractéristiques et avantages de l'invention ressortiront de la description suivante de modes particuliers de réalisation, donnés à titre d'exemples, en référence aux dessins annexés, sur lesquels :

- la figure 1 est une vue schématique en perspective d'une installation classique de transmission par câble à circuit de télécommunication incorporé entre deux postes, avec coupure et raccordement du câble au niveau de chaque dispositif d'ancrage,
- la figure 2 est une vue de détail de l'installation de la figure 1 montrant en élévation les coupure et raccordement d'un câble au niveau d'un pylône,
- les figures 3 et 4 sont des vues respectivement de côté et de dessus d'un dispositif d'ancrage classique utilisé dans l'installation de la figure 1,
- la figure 5 est une vue en élévation d'un premier mode de réalisation de dispositif d'ancrage selon l'invention,
- la figure 6 est une vue selon la flèche F de la figure 5,
- les figures 7 et 8 sont des vues analogues à celles des figures 5 et 6 d'un second mode de réalisation de dispositif d'ancrage selon l'invention, la figure 8 étant une vue selon la flèche F1 de la figure 7,
- les figures 9, 10 et 11 sont des vues de détail en coupe prises respectivement selon les lignes IX-IX, X-X et XI-XI de la figure 5,
- la figure 12 est une vue de côté d'un câble multi-couche à circuit de télécommunication incorporé auquel est applicable l'invention, et qui est partiellement dénudé pour faire apparaître les différentes couches constitutives,
- la figure 13 est une section du câble de la figure 12 prise selon le plan XIII-XIII,
- la figure 14 est une section selon un plan radial montrant un manchon coulissant et une paire de demi-coquilles cylindriques engagées autour d'un câble dénudé pour constituer une partie d'un dispositif d'ancrage selon l'invention, avant compression du manchon, et
- la figure 15 est une section selon un plan radial analogue à celle de la figure 14, mais après compression du manchon.

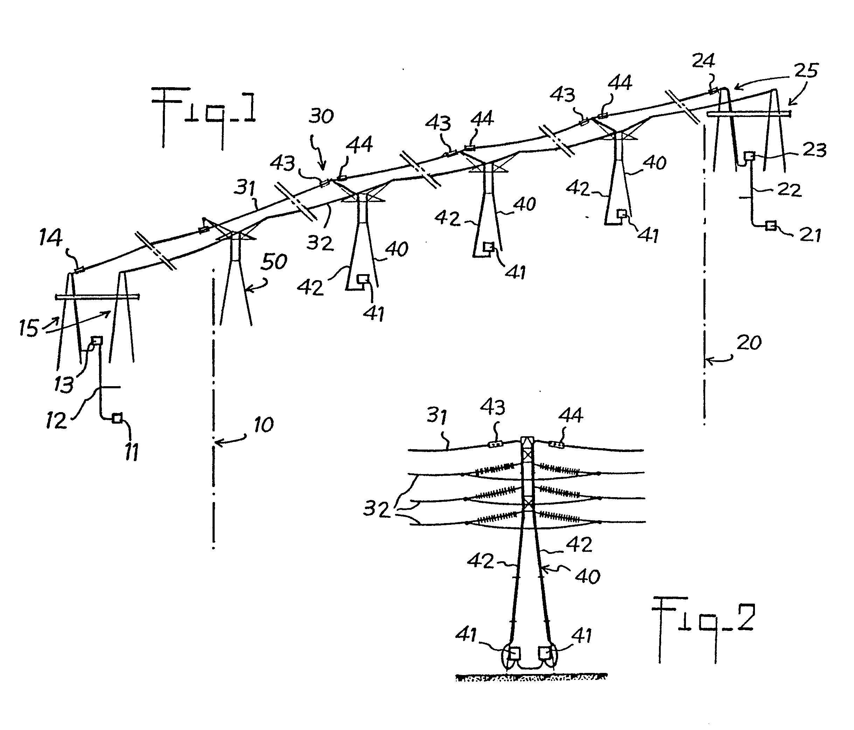

Si l'on se réfère à la figure 1, on voit un câble 31 à circuit de télécommunication incorporé reliant un premier poste 10 à un deuxième poste 20, en étant ancré à une série de pylônes de suspension 50 ou d'ancrage 40 répartis entre un pylône 15, situé à l'entrée-sortie du poste 10 et un pylône 25 situé à l'entrée-sortie du poste 20. Un ou plusieurs câbles 32 de transport d'énergie électrique sont également ancrés aux différents pylônes 40, 50.

Dans le poste 10, un équipement émetteur-récepteur 11 est relié par un câble de liaison 12 à un équipement de couplage 13 assurant le couplage avec le câble 31 ancré sur le pylône 15 par un dispositif d'ancrage 14. De la même manière, dans le poste 20, un équipement émetteur-récepteur 21 est relié par un câble de liaison 22 à un équipement de couplage 23 assurant le couplage avec le câble 31 ancré sur le pylône 25 par un dispositif d'ancrage 24.

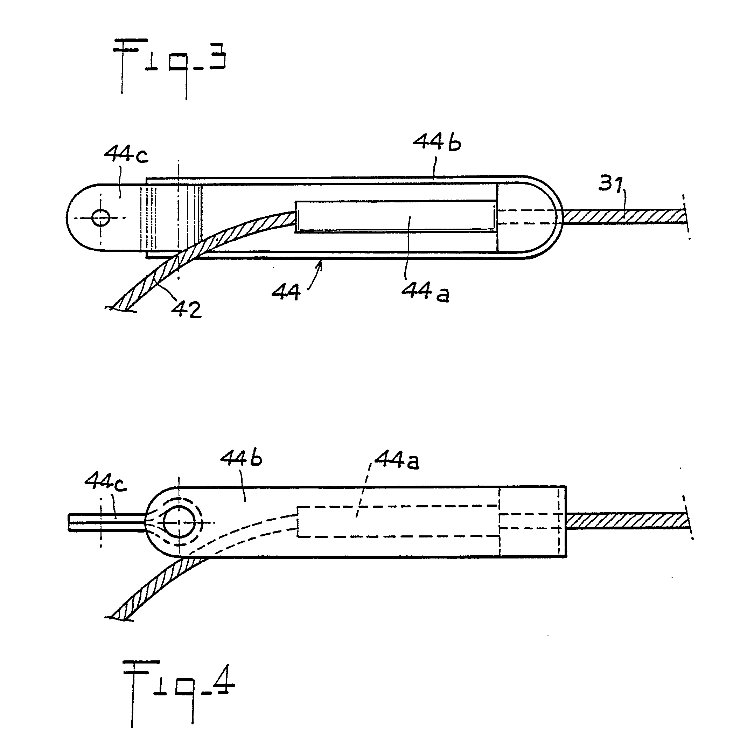

Comme représenté sur les figures 1 et 2, le câble 31 est ancré au niveau de chaque pylône intermédiaire d'ancrage 40 à l'aide de deux manchons traversants 43, 44 situés de part et d'autre d'un pylône 40. Le câble 31 est interrompu au niveau de chaque pylône d'ancrage 40 et ramené au pied du pylône 40 par des tronçons 42 pour permettre un raccordement des circuits de télécommunication composés de fibres optiques dans des coffrets de raccordement 41 qui peuvent également jouer le rôle d'équipements répéteurs pour compenser les atténuations liées aux jonctions des circuits de télécommunication.

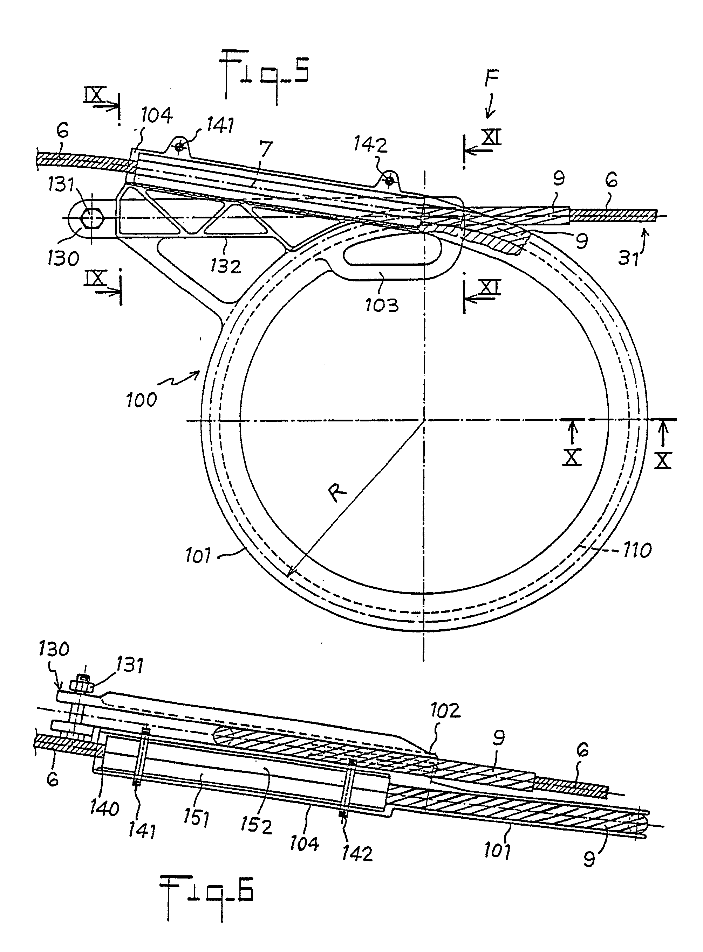

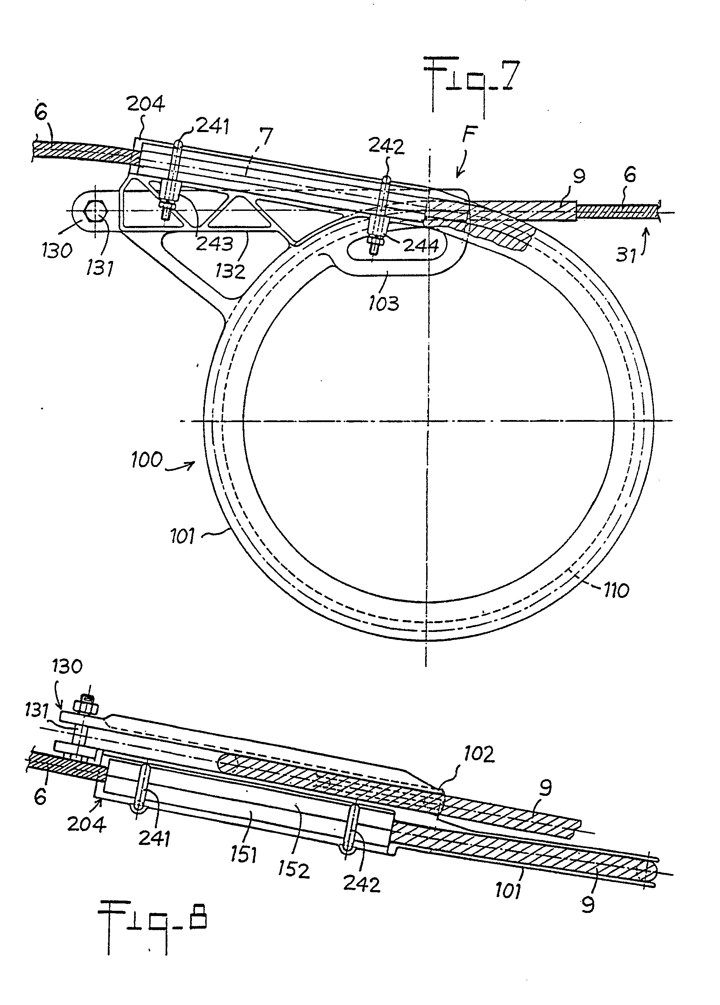

Les figures 3 et 4 montrent de façon plus détaillée un exemple de manchon traversant classique 44 permettant l'ancrage d'un câble 31 sur un pylône 40. Un tube 44a introduit par l'extrémité sectionnée du câble 31 est comprimé sur le câble 31 et fixé à une pièce en U 44b reliée par une articulation 44c au sommet du pylône 40. La partie 42 du câble 31 issue du tube comprimé 44a du côté du pylône 40 et composée du circuit de télécommunication et des couches de fil d'acier est dirigée vers le pied du pylône 40 pour faire l'objet d'une jonction avec le circuit de télécommunication de l'autre extrémité sectionnée du câble 31 raccordée au deuxième manchon traversant 43 de la figure 2.

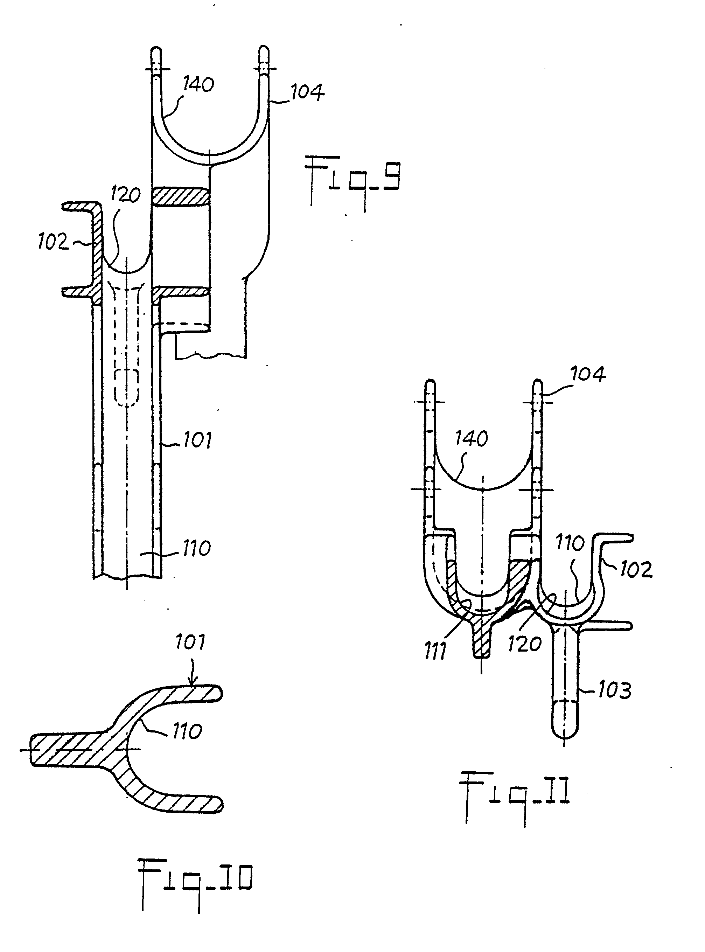

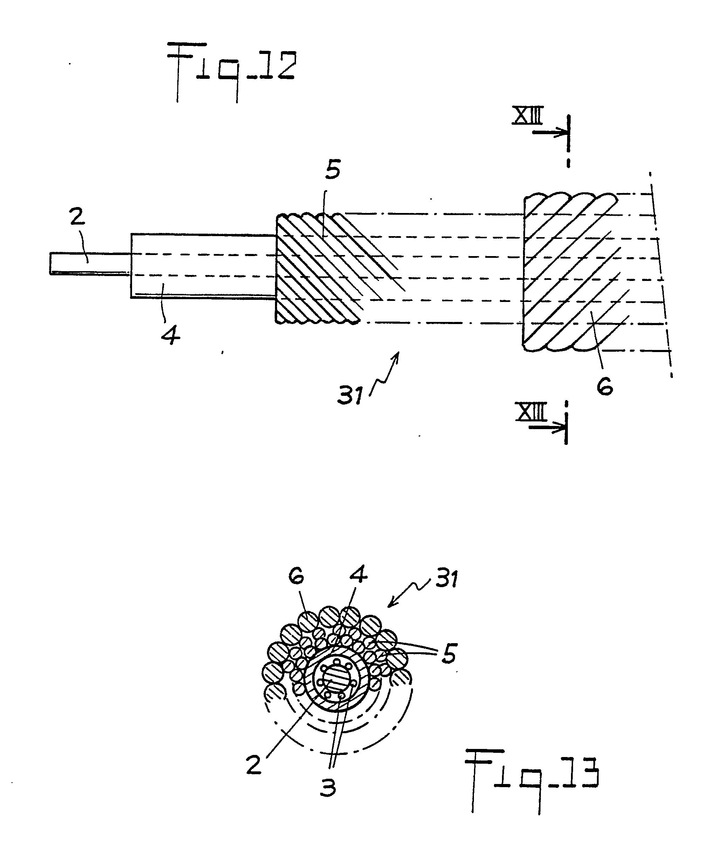

La présente invention vise précisément à éviter les opérations de sectionnement et raccordement d'un câble lors de la mise en place d'un dispositif d'ancrage sur un pylône, grâce à la mise en oeuvre d'un dispositif d'ancrage spécifique qui sera maintenant décrit en référence aux figures 5 et 6.

On voit sur les figures 5 et 6 un dispositif d'ancrage 100 comprenant une pince courbe 101 de rayon R qui définit un trajet circulaire de longueur $2\pi R$. La pince courbe 101 pourrait toutefois présenter non pas une seule spire, mais un ensemble de plusieurs spires de même rayon. Une gorge 110 dont le fond présente un profil semi-circulaire (figure 10) est ménagée à la périphérie de la pince courbe 101 pour recevoir le câble 31. La gorge 110 présente une section suffisante pour pouvoir recevoir le cas échéant un câble 31 muni d'une garniture 9 de renforcement et de protection du câble 31. La garniture 9 est constituée de fils préformés en hélice en alliage léger enroulés autour du câble 31 dans au moins toute la zone s'étendant dans la gorge 110 de la pince courbe 101.

Une poignée 103 est rattachée à la pince courbe 101 au voisinage de la zone d'introduction du câble 31 pour faciliter la préhension lors de la mise en place du dispositif d'ancrage.

Le câble 31 est introduit dans la gorge 110 par une entrée 120 délimitée par une partie 102 surmontant la poignée 103 (figure 11). Le câble 31 après avoir été enroulé sur tout le pourtour de la pince courbe 101 quitte la gorge 110 dans une zone 111 située à proximité de l'entrée 120, et qui est raccordée à un support en U 104 dont le fond 140 est incliné vers le haut à partir de la sortie de la pince courbe 101.

La pince courbe 101 et le support 104 sont rendus solidaires l'un de l'autre par une structure rigide 130 comprenant des armatures 132 et des moyens de liaison 131, et permettant l'ancrage sur un pylône de façon traditionnelle.

La pince courbe 101 en forme de "cor de chasse" a essentiellement pour rôle de diminuer la charge exercée par le câble 31 sur le support 104 et permettre ainsi au dispositif d'ancrage 100 dans son ensemble de tenir plus de 90 % de la charge de rupture du câble. A titre d'exemple, le rayon moyen R de la pince courbe 101 peut être compris entre environ 30 et 40 cm.

Au niveau du support 104, le câble 31 est équipé d'un raccord qui permet de reprendre la charge résiduelle présente après que le câble a effectué au moins un tour dans la pince courbe 101.

Le raccord destiné à reposer sur le support 104 est réalisé sans coupure du câble et sans qu'il soit nécessaire de faire appel à un outillage spécialisé complexe. En particulier, la non-interruption du circuit de télécommunication 2, 3 évite la nécessité de procéder à la jonction de fibres optiques qui est toujours délicate.

La structure du câble 31 est représentée sur les figures 12 et 13. Le circuit de télécommunication constitue l'âme centrale et se compose d'un support central 2 autour duquel plusieurs fibres optiques 3 sont enroulées en hélice. Un tube de protection 4 entoure le circuit de télécommunication proprement dit 2, 3.

A titre de variante, le circuit de télécommunication pourrait toutefois également être réalisé de façon plus traditionnelle sous la forme d'un câble coaxial par exemple. Selon encore une autre variante de réalisation, le circuit de télécommande 2, 3 pourrait être constitué par un câble à quartes téléphonique.

Une ou plusieurs couches 5 en fil d'acier galvanisé visant à conférer au câble 31 une haute résistance mécanique entourent le tube de protection 4 en alliage léger du circuit de télécommunication 2, 3. Une couche externe 6 en fil d'alliage léger tel qu'un alliage d'aluminium entoure la ou les couches 5 en fil d'acier. Enfin, la couche 6 assure une protection anti-corrosion, et permet aussi d'écouler vers la terre les courants de court-circuit ou la foudre.

Comme on peut le voir sur les figures 5 et 6, on n'effectue pas de serrage mécanique directement sur le câble 31 à la sortie de la pince courbe 101 afin de ne pas risquer d'endommager le circuit de télécommunication, mais un manchon 150 est engagé autour du câble 31 dans la partie venant reposer sur le support en U 104.

Dans la partie du câble 31 destinée à recevoir le manchon 150, le câble 31 est partiellement dénudé par enlèvement de la couche 6 la plus externe de protection anti-corrosion (figure 14). Deux demi-coquilles rigides 7, 7' définissant un cylindre et présentant une épaisseur légèrement supérieure à celle de la couche 6 qui a été enlevée, sont introduites autour du câble 31 au niveau du raccord. Le manchon 150 est constitué de deux parties 151, 152 définissant des portions de cylindre, mais munies chacune d'une ouverture 153, 154 permettant leur introduction autour du câble 31 sans coupure de celui-ci, qui sont engagées avec jeu autour du câble 31 et, par coulissement, sont amenées au niveau du raccord à réaliser, autour des deux demi-coquilles 7, 7' en s'imbriquant l'une dans l'autre par les parties d'épaisseur réduite 155, 156. Par compression radiale, par exemple de type hexagonale, les deux parties 151a, 152a du manchon 150 sont déformées et comprimées sur les deux demi-coquilles 7, 7' qui assurent, par leur profil circulaire interne, une répartition homogène des contraintes dans le sens radial et évitent une déformation du tube interne 4 afin de garantir une parfaite intégrité du circuit de télécommunication 2, 3. On voit sur la figure 15 la forme du raccord après compression, avec les lignes courbes 161a, 162a des surfaces de joint entre les deux parties 151a, 152a du manchon 150. Le manchon 150 est de préférence en un alliage d'aluminium afin de pouvoir être comprimé facilement. Les deux demi-coquilles 7, 7' peuvent également être réalisées en alliage d'aluminium.

Après compression du manchon 150 sur le câble 31, le raccord ainsi formé est placé dans le support 104 à profil en U et immobilisé par des clavettes 141, 142.

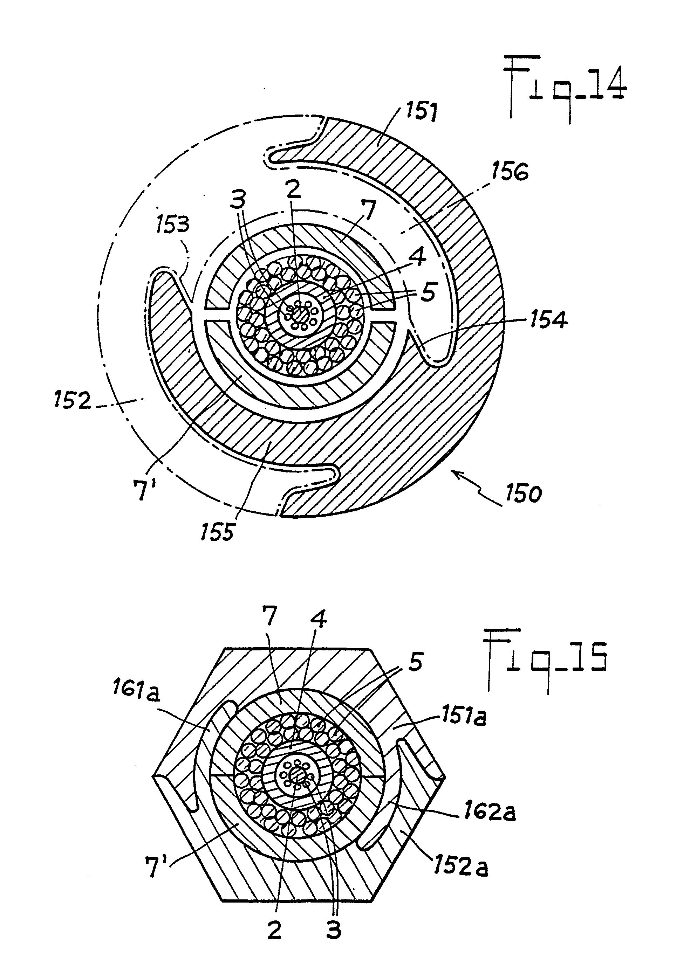

A titre de variante, on a représenté sur les figures 7 et 8 un support 204 de forme légèrement différente, sur lequel le raccord est fixé à l'aide d'étriers 241, 242 fermés sous le support 204 à l'aide de boulons 243, 244. D'autres variantes de réalisation du support 104, 204 et des moyens de fixation sur ce support sont naturellement envisageables. Toutefois, selon l'invention, les moyens de fixation 141, 142; 241, 242 sur le support 104; 204 agissent sur le manchon 150 et non directement sur le câble 31, ce qui garantit qu'aucune contrainte ne sera appliquée sur le circuit de télécommunication 2, 3.

La garniture 9 de renforcement et protection du câble 31 dans toute la gorge 110 de la pince courbe 101 peut être constituée de fils préformés en hélice en alliage léger. Cette garniture 9 est utile, mais peut cependant être supprimée dans certains cas.

## Revendications

1. Dispositif d'ancrage pour câble multicouche (5, 6) à circuit de télécommunication (2, 3) incorporé comprenant une couche externe (6) de protection en fil d'alliage léger, au moins une couche (5) de fil d'acier située sous ladite couche externe (6)) un tube (4) en alliage léger situé sous ladite couche (5) et un circuit de télécommunication (2, 3) situé à l'intérieur du tube (4) en alliage léger, dispositif caractérisé en ce qu'il comprend une pince courbe (101) munie d'une gorge (110) définissant un trajet circulaire de rayon R s'étendant sur au moins une distance égale à $2\pi R$; une paire de demi-coquilles (7, 7') à profil circulaire définissant un cylindre de diamètre correspondant au diamètre de ladite couche externe (6)) ladite paire de demi-coquilles (7) 7') étant engagée autour de la ou des couches (5) de fil d'acier sur une partie dénudée du câble multicouche située en sortie de la pince courbe (101) du côté d'un pylône d'ancrage (40); un manchon coulissant (150) constitué de deux parties complémentaires (151, 152) adaptées pour venir s'emboîter l'une dans l'autre, ledit manchon coulissant (150) étant disposé sur ladite paire de demi-coquilles (7, 7') et comprimé radialement contre celles-ci; et un support (104) pour le manchon (150) rendu solidaire de la pince courbe (101).

2. Dispositif selon la revendication 1, caractérisé en ce qu'il comprend en outre une garniture (9) de renforcement et protection du câble constituée par des fils préformés en hélice en alliage léger enroulés autour du câble dans au moins toute la zone s'étendant dans la gorge (110) de la pince courbe (101).

3. Dispositif selon la revendication 1 ou 2, caractérisé en ce que le circuit de télécommunication (2, 3) comprend un ensemble de fibres optiques (3).

4. Dispositif selon la revendication 1 ou 2 caractérisé en ce que le circuit de télécommunication (2) 3) comprend un conducteur coaxial.

5. Dispositif selon la revendication 1 ou la revendication 2, caractérisé en ce que le circuit de télécommunication est un câble à quartes téléphonique.

6. Dispositif selon l'une quelconque des revendications 1 à 5, caractérisé en ce que le support (104) pour le manchon (150) présente une section en forme de U et coopère avec des clavettes (141, 142) assurant un emprisonnement du manchon (150) du côté opposé au fond du support (104).

7. Dispositif selon l'une quelconque des revendications 1 à 5, caractérisé en ce que le support (104) pour le manchon (150) présente une section en forme de U et coopère avec des étriers (241, 242) boulonnés pour immobiliser le manchon (150) sur le support (104).

8. Dispositif selon l'une quelconque des revendications 1 à 7, caractérisé en ce que le manchon (150) est déformé et appliqué sur la paire de demi-coquilles (7, 7') par une compression hexagonale.

9. Dispositif selon l'une quelconque des revendications 1 à 8, caractérisé en ce que le manchon (150) est en un alliage d'aluminium.

Fig-1

Fig-2

Fig.3

44c

44b

31

44

42

44a

44c

44b

44a

Fig.4

Fig.5

Fig.6

Fig.7

Fig.8

Fig. 9

120

102

140    104

101

110

Fig. 10

101

110

104

140

110    102

111    120

103

Fig. 11

Fig.12

Fig.13

Fig. 14

Fig. 15

## Office européen des brevets

# RAPPORT DE RECHERCHE EUROPEENNE

Numero de la demande

EP 90 40 1906

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-117636 (BICC)<br>* page 8, ligne 1 - page 9, ligne 7; revendications 1, 2, 6, 8; figures 1-3 *<br>--- | 1, 3, 6 | H02G7/05 |
| A | FR-A-658440 (HOFMANN)<br>* page 1, ligne 51 - page 2, ligne 47; figures 3, 4 *<br>--- | 1, 7 | |
| A | DE-C-589193 (HOFMANN)<br>* page 3, lignes 18 - 40; revendications 1, 2; figures 2, 4 *<br>----- | 1, 2 | |

| | | | DOMAINES TECHNIQUES RECHERCHES (Int. Cl.5) |
|---|---|---|---|
| | | | H02G |

Le présent rapport a été établi pour toutes les revendications

| Lieu de la recherche | Date d'achèvement de la recherche | Examinateur |
|---|---|---|
| LA HAYE | 24 AOUT 1990 | RIEUTORT A.S. |

EPO FORM 1503 03.82 (P0402)